# EUROPÄISCHE PATENTSCHRIFT

(11) **EP 1 868 165 B1**
(45) Veröffentlichungstag und Bekanntmachung des Hinweises auf die Patenterteilung: **17.06.2015**
(21) Anmeldenummer: 05003563.3
(22) Anmeldetag: 18.02.2005
(51) Int. Cl.: G07C 5/08, B60K 35/00, G01F 9/00, B60W 50/00, B60W 40/00

(54) **Messsystem für Betriebskenngrößen eines Kraftfahrzeuges**
Measuring system for a vehicle operating parameters
Système pour mesurer les paramètres de fonctionnement d'un véhicule

(30) Priorität: 19.03.2004 DE 102004013612
(43) Veröffentlichungstag der Anmeldung: 19.12.2007
(73) Patentinhaber: GM Global Technology Operations LLC, Detroit, MI 48265-3000 (US)
(72) Erfinder: Koes, Hermann, 65479 Raunheim (DE)
(74) Vertreter: Daniel, Ulrich W.P.

(56) Entgegenhaltungen:
- EP-A- 1 227 007
- DE-A1- 4 307 367
- DE-A1- 19 941 970
- US-A- 5 369 584

## Beschreibung

Die Erfindung bezieht sich auf ein Messsystem für Betriebskenngrößen eines Kraftfahrzeuges mit einem Messgerät und damit verbundenen Sensoren zur Erfassung der Betriebskenngrößen, die an dem Messgerät ausgewertet und in einer Anzeige dargestellt werden, und auf ein Messverfahren für Betriebskenngrößen eines Kraftfahrzeuges.

Es ist bereits bekannt, bei Kraftfahrzeugen Bordcomputer vorzusehen, an denen eine Ermittlung unterschiedlicher Betriebskenngrößen, wie z. B. eines aktuellen Kraftstoffverbrauchs und/oder eines aus dem Gesamtkraftstoffverbrauch und der zurückgelegten Fahrstrecke gebildeter durchschnittlichen Kraftstoffverbrauchs, möglich ist. In der Regel sind auch Betriebskenngrößen wie eine Durchschnittsgeschwindigkeit aus dem Verhältnis zwischen zurückgelegter Fahrstrecke und Gesamtfahrdauer bestimmbar. Derartige Bordcomputer sind üblicherweise direkt mit der Motronic gekoppelt, an der die zur Ermittlung der Betriebskenngrößen erfoderlichen Ausgangsdaten abgefragt werden.

In der heutigen Motorenentwicklung spielt insbesondere die Einhaltung vorgegebener Kraftstoffverbrauchswerte eine erhebliche Rolle. Sowohl im Prüfstands- wie auch im Fahrversuch werden diese Vorgaben überprüft und eventuelle Änderungen am Motor verahlasst. Messgeräte zum Ermitteln des Kraftstoffverbrauchs sind allerdings sowohl in der Anschaffung als auch in der Unterhaltung (Kalibrierung, Reparatur) teuer. Zudem sind sie nur im Prüfstandsbetrieb (Powertrain sowie Motor- und Abgasprüfstände) und, wenn überhaupt, nur mit hohem Aufwand im Fahrversuch einsetzbar. Der Aufwand rührt dabei insbesondere daher, dass in diesem Entwicklungsstadium eine umfangreiche Direktverkabelung des Messgeräts mit der betroffenen Sensorik vorgenommen werden muss. Dies gilt in gleichem Maß für eventuelle Bordcomputer, deren Einrüstung erst in einem Serienfahrzeug vorgesehen ist.

Die DE 199 41 970 A1 beschreibt ein Verfahren und eine Vorrichtung zum Aufzeichnen und Darstellen von Verbrauchs- und Fahrdaten eines Kraftfahrzeuges. Dazu ist ein Steuergerät mit einer Bordnetzuhr und Zählern vorgesehen, dem Betriebssignale des Kraftfahrzeuges zuführbar und mittels der Zähler aufaddierbar sind. Die Messergebnisse sind dann an einer Anzeigeeinheit darstellbar. Über die Kopplung des Steuergeräts an die Sensorik ist der Schrift nichts zu entnehmen.

Die DE 30 49 158 C2 offenbart ein Verfahren zum Anzeigen des momentanen Kraftstoffverbrauchs von durch Brennkraftmaschinen angetriebenen Kraftfahrzeugen. Dabei werden von Sensoren erfasste Werte von Drehzahl und Last in ein maschinentypisches Kennfeld gegeben, aus dem ein zugehöriger Verbrauchswert ermittelbar und an einem Anzeigegerät darstellbar ist. Über die Kopplung der Sensorik ist auch dieser Schrift nichts zu entnehmen.

Im Weiteren zeigt die DE 43 07 367 A1 gemäß dem Oberbegriff des Anspruchs 1 eine Anzeige und Bedieneinrichtung , die über eine Leitung mit einer Rechnereinheit verbunden ist, wobei die Rechnereinheit über eine weitere Leitung mit einem Bussystem gekoppelt ist, dem sowohl Bedienelemente als auch als auch Zustandsinformationen bereitstellende Sensoren zugeordnet sind. Von der Rechenreinheit werden die von den Sensoren gelieferten Daten aufbereitet und zur Anzeige auf den Flachbildschirm gebracht. Die Rechnereinheit übernimmt lediglich die Abfrage der Zustandsinformationen sowie die Bereitstellung einer Bildschirmmaske und gegebenenfalls ein Ordnen der Zustandsinformationen zur Darstellung in einer gewünschten Reihenfolge.

Es ist Aufgabe der vorliegenden Erfindung, ein Messsystem für ein Kraftfahrzeug und ein Messverfahren der eingangs genannten Art anzugeben, das leicht in ein Fahrzeug zu integrieren, einfach aufgebaut und daher kostengünstig zu realisieren ist, wobei eine Genauigkeit der Messergebnisse beeinflussbar ist.

Die Aufgabe wird erfindungsgemäß bei einem Messsystem dadurch gelöst, dass die erfassten Betriebskenngrößen über einen Fahrzeug-Datenbus an das einen Prozessor des Fahrzeug-Datenbusses zur Verarbeitung der Betriebskenngrößen umfassende Messgerät signalisiert werden, wobei eine Schalteinheit vorgesehen ist, an der ein Messintervall zum Erfassen der Betriebskenngrößen vorgebbar ist

Des Weiteren wird die Aufgabe erfindungsgemäß durch ein Messverfahren mit den Merkmalen des Anspruchs 23 gelöst.

Ein wesentlicher Vorteil der Erfindung besteht darin, dass alle zum Ermitteln der Betriebskenngrößen, die vorzugsweise einen Verbrauchswert für Kraftstoff, einen Fahrstreckenwert, einen Geschwindigkeitswert, einen Tankfüllungswert, einen Temperaturwert, einen Drehzahlwert und/oder einen Drehmomentwert umfassen, erforderlichen Daten bereits auf dem Fahrzeug-Datenbus zur Verfügung stehen. Bei auf dem Fahrzeug-Datenbus ausreichend zur Verfügung stehender Rechnerkapazität können die Betriebskenngrößen in einem Datenverzeichnis (Data-Dictionary) direkt definiert und ständig auf den Fahrzeug-Datenbus gelegt werden. Eine aufwendige Verkabelung vorkonfektionierter Messgeräte mit Direktzugriff auf die Motronic entfallen, womit sich die Kosten eines solchen Messsystems auf das Messgerät selbst beschränken. Das Messgerät ist besonders klein ausführbar und damit leicht in ein Kraftfahrzeug zu integrieren, kostet dabei deutlich weniger als eventuelle Alternativen und lässt z. B. eine Ermittlung des Kraftstoffverbrauchs mit sehr hoher Genauigkeit (in l/100 km) zu. Dies ist zudem sowohl im Prüfstands- als auch im Fahrversuch möglich. Durch die Vorgabe des Messintervalls zum Erfassen der Betriebskenngrößen lässt sich die Messung grober oder feiner einstellen, z. B. je nach gewünschtem Messzeitraum und zur Verfügung stehender Rechner- bzw. Speicherkapazität. da das Messgerät einen Prozessor des Fahrzeug-Datenbusses zur Verarbeitung der Betriebskenngrößen umfasst, ist es nicht erforderlich, dass das Messgerät einen eigenen Prozessor aufweist. Es greift vielmehr auf einen bereits vorhandenen Prozessor zu, dem weitere Funktionen zugeordnet sind.

In Ausgestaltung der Erfindung sind die Betriebskenngrößen standardisierten Signalgruppen eines CAN-Datenbusproto-kolls zugeordnet. Der CAN(Controller Area Network)-Bus ist im Kraftfahrzeugbau mittlerweile stark verbreitet, wodurch er im Regelfall im Kraftfahrzeug schon zur Verfügung steht. Die Nutzung standardisierter Signalgruppen des Data-Dictionary macht eine proprietäre Erweiterung des Protokolls und damit eine Überarbeitung der Schnittstellen überflüssig.

Bevorzugt ist der Verbrauchswert in der ECM (Engine Control Module)-Signalgruppe EngineGeneralStatus mit der (Data-Dictionary)Kennung $300 - auch Identifier genannt - abgelegt. In dieser Signalgruppe werden Signalfelder für Betriebskenngrößen bereit gestellt, die den Status des Motors beschreiben. Dabei ist es besonders vorteilhaft, den Verbrauchswert in dem Signalfeld FuelInjectedRollingCount abzulegen. Dabei handelt es sich um einen üblicherweise alle 100 ms aktualisierten Kraftstoffverbrauchswert von 0 bis 1,99997 l.

Zweckmäßigerweise ist der Fahrstreckenwert in der ECM-Signalgruppe VehicleSpeedandOdometer mit der Kennung $410 abgelegt. In dieser Signalgruppe werden Signalfelder für Betriebskenngrößen bereit gestellt, die den Status der Fahrzeugbewegung beschreiben. Dabei ist es besonders vorteilhaft, den Fahrstreckenwert in dem Signalfeld DistanceRollingCountLeftNonDrivenWheel, alternativ auch in dem Signalfeld DistanceRollingCountRightNonDrivenWheel abzulegen. Es handelt sich dabei um einen üblicherweise alle 100 ms aktualisierten Fahrstreckenwert von 0 bis 1023,98 Meter. Hier haben bisherige Tests eine besonders hohe Genauigkeit ergeben.

Vorteilhafterweise ist der Geschwindigkeitswert in einem Signalfeld VehicleSpeed abgelegt. Der Geschwindigkeitswert kann unter Heranziehen einer verstrichenen Zeit als Ausgangsdatum zur indirekten Bestimmung einer Fahrstrecke oder alternativ zu den vorstehenden Fahrstreckenwerten in DistanceRollingCountLeftNonDrivenWheel oder DistanceRollingCountRightNonDrivenWheel dienen. Zur Bestimmung der Zeit kann ein an sich bekannter Zeitgeber vorgesehen sein.

Bevorzugt liegt das Messintervall in einem Bereich zwischen 49 ms und 101 ms. Grundsätzlich ist jede beliebige Zeit vorgebbar. Der vorgenannte Bereich hat sich aber in der Praxis als ausreichend genau und technisch beherrschbar erwiesen.

Nach einer Weiterbildung ist an dem Messgerät aus über ein Messintervall erfassten Verbrauchswerten ein aktueller Verbrauch ermittelbar. Dabei wird mittels einer Division eines ermittelten Verbrauchswerts durch eine gefahrene Strecke über ein gemeinsames Messintervall von z. B. 100 ms hinweg eine Verbrauchsberechnung in l/100km durchgeführt und angezeigt. Bei Versuchsfahrten entsteht dabei die Möglichkeit ständiger Kraftstoffverbrauchsüberwachung.

Vorteilhafterweise ist an dem Messgerät wenigstens ein Zähler vorgesehen, an dem Verbrauchs- und Fahrstreckenwerte mehrerer Messintervalle aufaddiert werden, aus denen ein durchschnittlicher Verbrauch ermittelbar ist. Dies geschieht wie vorstehend beschrieben, wobei eine Zeitdauer ab 50 ms bis zu einer beliebigen gewünschten Zeit möglich ist. Die einzeln aufaddierten Verbrauchsund Fahrstreckenwerte lassen sich über eine Gesamtbetriebsdauer auch gleichzeitig als Gesamtverbrauch und Gesamtfahrstrecke darstellen. Letztere erlaubt auch Festigkeits- und Verschleißbetrachtungen am Kraftfahrzeug über definierte Fahrstrecken. Zweckmäßigerweise ist der Zähler rücksetzbar.

Weiterhin ist bevorzugt eine Gesamtfahrstrecke aus einer Mittelung der aufaddierten Fahrstreckenwerte in dem Signalfeld DistanceRollingCountLeftNonDrivenWheel und DistanceRollingCountRightNonDrivenWheel ermittelbar. Durch Einbeziehung beider nicht angetriebenen Räder steigt die Genauigkeit der Messungen.

Ferner geht vorzugsweise in die Mittelung der Fahrstreckenwerte der Geschwindigkeitswert des Signalfelds VehicleSpeed ein. Die Einbeziehung der indirekt aus aufaddierten Geschwindigkeitswerten unter Berücksichtigung einer verstrichenen Zeit ermittelten Fahrstrecke erhöht die Genauigkeit der Messungen weiter.

Zweckmäßigerweise ist aus dem Tankfüllstandswert an dem Messgerät unter Berücksichtigung eines durchschnittlichen Verbrauchs eine Restreichweite ermittelbar. Auch der Tankfüllstandswert in l kann auf den Fahrzeug-Datenbus gelegt und durch einfache Division durch den durchschnittlichen Verbrauch in 1/10km eine Restreichweite in km berechnet werden

Vorteilhafterweise ist an dem Messgerät ein Zähler vorgesehen, an dem Messintervalle zum Ermitteln einer Gesamtfahrdauer aufaddiert werden. Diese kann - wie die Gesamtfahrstrecke - ebenfalls aus Gründen der Festigkeits- und Verschleißbetrachtung von Belang sein.

Des Weiteren ist zweckmäßigerweise an dem Messgerät aus einer zurückgelegten Gesamtfahrstrecke und einer Gesamtfahrdauer eine Durchschnittsgeschwindigkeit ermittelbar. Beide Ausgangswerte sind leicht zu ermitteln, wobei zur Zeitbestimmung ein handelsüblicher Zeitgeber vorgesehen sein kann. Der durchschnittliche Verbrauch kann damit auch in Abhängigkeit einer durchschnittlichen Geschwindigkeit dargestellt werden.

In weiterer Ausgestaltung ist aus dem Temperaturwert an dem Messgerät eine Ansaugtemperatur ermittelbar ist. Der durchschnittliche Verbrauch kann sonach in Abhängigkeit der Ansaugtemperatur dargestellt werden. Denkbar ist auch die Aufnahme eines Druckwerts, aus dem ein Ladedruck am Motor ermittelbar ist.

Darüber hinaus ist zweckmäßigerweise an dem Messgerät eine analoge oder digitale Anzeige zur Darstellung eines Messergebnisses vorgesehen. Eine analoge Anzeige ist besonders kostengünstig und übersichtlich, eine digitale Anzeige genauer abzulesen, dafür aber auch teurer.

Bevorzugt ist die Anzeige auf die Darstellung unterschiedlicher Betriebskenngrößen umschaltbar. Damit lassen sich sehr viele unterschiedliche Betriebskenngrößen ständig überwachen. Es kann auch noch ein Speicher vorgesehen sein, in dem alle versuchsweise erfassten Werte abspeicherbar und z. B. zur nachfolgenden Auswertung in einem Labor wieder auslesbar sind. Die Anzeige kann beispielsweise bei einer unterhalb eines einstellbaren Grenzwertes für die Geschwindigkeit des Kraftfahrzeuges liegenden momentanen Geschwindigkeit selbsttätig von einem in l/100 km dargestellten durchschnittlichen Verbrauch in einen in l/h dargestellten durchschnittlichen Verbrauch umgeschaltet werden.

Nach einer vorteilhaften Weiterbildung des Erfindungsgedankens ist das Messgerät als reine Software ausgeführt. Eine solche Software lässt sich auch in anderen mit dem Fahrzeug-Datenbus gekoppelten Geräten implementieren, wodurch Platz gespart wird und zusätzliche Kosten für Hardware entfallen. Die Software kann von dem Fahrzeughersteller selbst an seine Anforderungen und Testverfahren angepasst werden, was einen Wettbewerbsvorteil gegenüber Konkurrenten mit sich bringt. Zur Ausgabe der Messergebnisse muss das genutzte Gerät nicht unbedingt eine Anzeige aufweisen, sondern kann dazu wiederum eine Anzeige eines anderen mit dem Fahrzeug-Datenbus gekoppelten Geräts nutzen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispiels unter Bezugnahme auf die zugehörigen Zeichnungen näher erläutert. Gleiche oder gleichwirkende Teile sind mit gleichen Bezugsziffern versehen. Es zeigt:

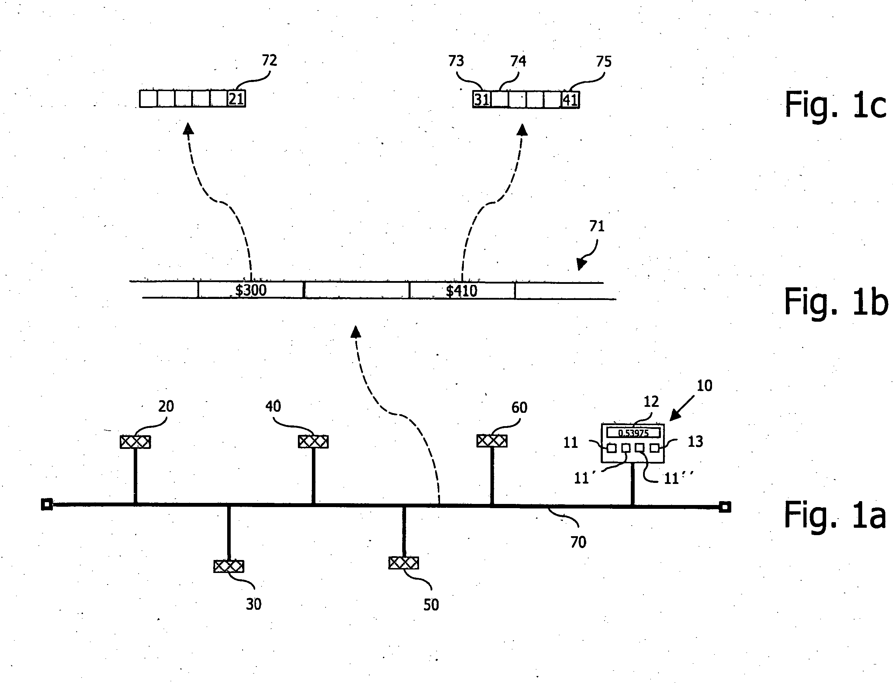

- Fig. 1a: eine schematische Blockdarstellung einzelner Komponenten eines erfindungsgemäßen Messsystems,
- Fig. 1b: einen Abschnitt eines CAN-Datenbusprotokolls mit standisierten Signalgruppen und
- Fig. 1c: die Signalgruppen gemäß Fig. 1b mit einzelnen Signalfeldern für erfasste Betriebskenngrößen.

Ein Messgerät 10 zum Ermitteln des Kraftstoffverbrauchs eines Kraftfahrzeuges mit einer Brennkraftmaschine ist mit einer Schalteinheit 13 zum Umschalten einer Anzeige 12 auf unterschiedliche Messergebnisse versehen und verfügt weiterhin über Zähler 11, 11', 11'' zum Aufaddieren von Sensorwerten. An dem Messgerät 10 findet die Auswertung von Betriebskenngrößen statt, die als Verbrauchswert 21, Fahrstreckenwert 31, Geschwindigkeitswert 41, Tankfüllstandswert 51 und Temperaturwert 61 eines Verbrauchs-, Fahrstrecken-, Geschwindigkeits-, Tankfüllstands- und Temperatursensors 20, 30, 40, 50, 60 vorliegen. Die Werte liegen über einen CAN-Bus 70 an dem Messgerät 10 an, werden dort ausgewertet und das Messergebnis wird abhängig von der Anwahl der Schalteinheit 13 an der Anzeige 12 dargestellt.

In Fig. 1b ist ein Abschnitt eines CAN-Datenbusprotokolls 71 mit standardisierten Signalgruppen des Datenverzeichnisses (Data-Dictionary) mit den Kennungen (Identifier) $300 (EngineGeneralStatus) und $410 (VehicleSpeedandOdometer).

Fig. 1c zeigt die Signalgruppen $300 und $410 der Fig. 1b mit einzelnen Signalfeldern 72 (FuelInjectedRollingCount), 73 (DistanceRollingCountLeftNonDrivenW-heel), 74 (DistanceRollingCountRightNonDrivenWheel), 75 (DistanceRollingCountRightNonDrivenWheel) für erfasste Betriebskenngrößen. In Signalfeld 72 ist ein Verbrauchswert 21, in den Signalfeldern 73 und 74 ein in diesem Beispiel jeweils identischer Fahrstreckenwert 31 und in Signalfeld 75 ein Geschwindigkeitswert 41 abgelegt, die von den entsprechenden Sensoren 20, 30 und 40 auf den CAN-Bus 70 signalisiert werden. Ein Tankfüllstandswert 51 und ein Temperaturwert 61 sind in anderen Signalgruppen unterschiedlicher Kennungen im Datenbereich des CAN-Datenbusprotokolls 71 hinterlegt.

Die Signalfelder 72, 73, 74 werden an dem Messgerät ausgelesen. Zum Ermitteln z. B. eines durchschnittlichen Verbrauchs in l/100 km werden die Verbrauchswerte 21 in dem Signalfeld 72 über einen gewünschten Zeitraum an dem Zähler 10 zu einem Gesamtverbrauch aufaddiert. Die nicht unbedingt identischen Fahrstreckenwerte 31 in den Signalfeldern 73 und 74 werden an dem Zähler 10' über den gleichen Zeitraum zu einer jeweiligen Gesamtfahrstrecke aufaddiert und gemittelt. Dadurch entsteht ein besonders exaktes Messergebnis. Durch Division des Gesamtverbrauchs durch die Gesamtfahrstrecke wird der durchschnittliche Verbrauch bestimmt.

Die Gesamtfahrstrecke kann in diesem Ausführungsbeispiel auch indirekt aus über den Zeitraum an dem Zähler 10" aufaddierten Geschwindigkeitswerten 41 in dem Signalfeld 75 gewonnen werden und in den durchschnittlichen Verbrauch oder zusätzlich in die vorstehend beschriebene Mittelung der Fahrstreckenwerte 31 eingehen.

Da alle Ausgangsdaten für eine umfangreiche Messpalette schon auf dem CAN-Bus 70 vorhanden sind, ist durch Abgriff von Verbrauchs-, Fahrstrecken- und Geschwindigkeitswerten 21, 31, 41 eine einfache und kostengünstige Umsetzung eines Verbrauchsmesssystems durch alleinigen Einsatz des Messgeräts 10 im Kraftfahrzeug möglich. Das Messgerät 10 ist besonders klein ausführbar, wobei eine aufwendige Verklabelung entfällt.

## Patentansprüche

1. Messsystem für Betriebskenngrößen eines Kraftfahrzeuges mit einem Messgerät (10) und damit verbundenen Sensoren (20, 30, 40, 50, 60) zur Erfassung der Betriebskenngrößen, die an dem Messgerät (10) ausgewertet und in einer Anzeige dargestellt werden, **dadurch gekennzeichnet, dass** die erfassten Betriebskenngrößen über einen Fahrzeug-Datenbus (70) an das einen Prozessor des Fahrzeug-Datenbusses (70) zur Verarbeitung der Betriebskenngrößen umfassende Messgerät (10) signalisiert werden, wobei eine Schalteinheit (13) vorgesehen ist, an der ein Messintervall zum Erfassen der Betriebskenngrößen (21, 31, 41, 51, 61) vorgebbar ist.

2. Messsystem nach Anspruch 1, **dadurch gekennzeichnet, dass** die Betriebskenngrößen einen Verbrauchswert (21) für Kraftstoff, einen Fahrstreckenwert (31), einen Geschwindigkeitswert (41), einen Tankfüllungswert (51), einen Temperaturwert (61), einen Drehzahlwert und/oder einen Drehmomentwert umfassen.

3. Messsystem nach Anspruch 1 oder 2, **dadurch gekennzeichnet, dass** die Betriebskenngrößen standardisierten Signalgruppen eines CAN-Datenbusprotokolls (71) zugeordnet sind.

4. Messsystem nach den Ansprüchen 2 und 3, **dadurch gekennzeichnet, dass** der Verbrauchswert (21) in der ECM-Signalgruppe EngineGeneralStatus mit der Kennung $300 abgelegt ist.

5. Messsystem nach Anspruch 4, **dadurch gekennzeichnet, dass** der Verbrauchswert (21) in dem Signalfeld FuelInjectedRollingCount (72) abgelegt ist.

6. Messsystem nach den Ansprüchen 2 und 3, **dadurch gekennzeichnet, dass** der Fahrstreckenwert (31) in der ECM-Signalgruppe VehicleSpeedandOdometer mit der Kennung $410 abgelegt ist.

7. Messsystem nach Anspruch 6, **dadurch gekennzeichnet, dass** der Fahrstreckenwert (31) in dem Signalfeld DistanceRollingCountLeftNonDrivenWheel (73) abgelegt ist.

8. Messsystem nach Anspruch 6 oder 7, **dadurch gekennzeichnet, dass** der Fahrstreckenwert (31) in dem Signalfeld DistanceRollingCountRightNonDrivenWheel (74) abgelegt ist.

9. Messsystem nach den Ansprüchen 2 und 3, **dadurch gekennzeichnet, dass** ein Geschwindigkeitswert (41) in einem Signalfeld VehicleSpeed (75) abgelegt ist.

10. Messsystem nach Anspruch 1, **dadurch gekennzeichnet, dass** das Messintervall in einem Bereich zwischen 49 ms und 101 ms liegt.

11. Messsystem nach einem der Ansprüche 1 bis 10, **dadurch gekennzeichnet, dass** an dem Messgerät (10) aus über ein Messintervall erfassten Verbrauchswerten (21) ein aktueller Verbrauch ermittelbar ist.

12. Messsystem nach einem der Ansprüche 1 bis 11, **dadurch gekennzeichnet, dass** an dem Messgerät (10) wenigstens ein Zähler (11) vorgesehen ist, an dem Verbrauchs- (21) und Fahrstreckenwerte (31) mehrerer Messintervalle aufaddiert werden, aus denen ein durchschnittlicher Verbrauch ermittelbar ist.

13. Messsystem nach Anspruch 12, **dadurch gekennzeichnet, dass** der Zähler (11) rücksetzbar ist.

14. Messsystem nach Anspruch 12, **dadurch gekennzeichnet, dass** eine Gesamtfahrstrecke aus einer Mittelung der aufaddierten Fahrstreckenwerte (31) in dem Signalfeld DistanceRollingCountLeftNonDrivenWheel (73) und DistanceRollingCountRightNonDrivenWheel (74) ermittelbar ist.

15. Messsystem nach Anspruch 14, **dadurch gekennzeichnet, dass** in die Mittelung der Fahrstreckenwerte (31) der Geschwindigkeitswert des Signalfelds VehicleSpeed (75) eingeht.

16. Messsystem nach einem der Ansprüche 2 bis 15, **dadurch gekennzeichnet, dass** aus dem Tankfüllstandswert (51) an dem Messgerät (10) unter Berücksichtigung eines durchschnittlichen Verbrauchs eine Restreichweite ermittelbar ist.

17. Messsystem nach einem der Ansprüche 1 bis 16, **dadurch gekennzeichnet, dass** an dem Messgerät (10) ein Zähler (11'') vorgesehen ist, an dem Messintervalle zum Ermitteln einer Gesamtfahrdauer aufaddiert werden.

18. Messsystem nach einem der Ansprüche 1 bis 17, **dadurch gekennzeichnet, dass** an dem Messgerät (10) aus einer zurückgelegten Gesamtfahrstrecke und einer Gesamtfahrdauer eine Durchschnittsgeschwindigkeit ermittelbar ist.

19. Messsystem nach einem der Ansprüche 2 bis 18, **dadurch gekennzeichnet, dass** aus dem Temperaturwert (61) an dem Messgerät (10) eine Ansaugtemperatur ermittelbar ist.

20. Messsystem nach einem der Ansprüche 1 bis 19, **dadurch gekennzeichnet, dass** an dem Messgerät (10) eine analoge oder digitale Anzeige (12) zur Darstellung eines Messergebnisses vorgesehen ist.

21. Messsystem nach Anspruch 20, **dadurch gekennzeichnet, dass** die Anzeige (12) auf die Darstellung unterschiedlicher Betriebskenngrößen umschaltbar ist.

22. Messsystem nach einem der Ansprüche 1 bis 21, **dadurch gekennzeichnet, dass** das Messgerät (10) als reine Software ausgeführt ist.

23. Messverfahren zum Ermitteln von Betriebskenngrößen eines Kraftfahrzeuges, mit einem Messsystem nach Anspruch 1, bei dem die von Sensoren (20, 30 40, 50, 60) erfassten Betriebskenngrößen auf einen Fahrzeug-Datenbus (70) signalisiert, an einem daran angeschlossenen Messgerät (10) ausgewertet und zur Anzeige gebracht werden.

## Claims

1. A measuring system for operating parameters of a motor vehicle, comprising a measuring device (10) and sensors (20, 30, 40, 50, 60) connected thereto for detecting the operating parameters which are evaluated in the measuring device (10) and are displayed on a display, **characterized in that** the detected operating parameters are signaled to the measuring device (10) via a vehicle data bus (70), which measuring device (10) comprises a processor of the vehicle data bus (70) for processing the operating parameters, wherein a switchgear unit (13) is provided in which a measuring interval for detecting the operating parameters (21, 31, 41, 51, 61) can be predetermined.

2. A measuring system according to claim 1, **characterized in that** the operating parameters comprise a consumption value (21) for fuel, a driving distance value (31), a speed value (41), a tank filling value (51), a temperature value (61), a rev counter value and/or a torque value.

3. A measuring system according to claim 1 or 2, **characterized in that** the operating parameters are assigned standardized signal groups of a CAN data bus protocol (71).

4. A measuring system according to the claims 2 and 3, **characterized in that** the consumption value (21) is stored in the ECM signal group EngineGeneralStatus with the identifier $300.

5. A measuring system according to claim 4, **characterized in that** the consumption value (21) is stored in the signal field FuelInjectedRollingCount (72).

6. A measuring system according to claims 2 and 3, **characterized in that** the driving distance value (31) is stored in the ECM signal group VehicleSpeedandOdometer with the identifier $410.

7. A measuring system according to claim 6, **characterized in that** the driving distance value (31) is stored in the signal field DistanceRollingCountLeftNonDrivenWheel (73).

8. A measuring system according to claim 6 or 7, **characterized in that** the driving distance value (31) is stored in the signal field DistanceRollingCountRightNonDrivenWheel (74).

9. A measuring system according to claims 2 and 3, **characterized in that** a speed value (41) is stored in a signal field VehicleSpeed (75).

10. A measuring system according to claim 1, **characterized in that** the measuring interval lies in a range of between 49 ms and 101 ms.

11. A measuring system according to one of the claims 1 to 10, **characterized in that** current consumption can be determined in the measuring device (10) from consumption values (21) detected over a measuring interval.

12. A measuring system according to one of the claims 1 to 11, **characterized in that** at least one counter (11) is provided in the measuring device (10), in which consumption values (21) and driving distance values (31) of several measuring intervals are added up, from which an average consumption can be determined.

13. A measuring system according to claim 12, **characterized in that** the counter (11) is resettable.

14. A measuring system according to claim 12, **characterized in that** a total driving distance can be determined from averaging the added driving distance values (31) in the signal field DistanceRollingCountLeftNonDrivenWheel (73) and DistanceRollingCountRightNonDrivenWheel (74).

15. A measuring system according to claim 14, **characterized in that** the speed value of the signal field VehicleSpeed (75) is included in the averaging of the driving distance values (31).

16. A measuring system according to one of the claims 2 to 15, **characterized in that** a residual range can be determined from the tank filling level value (51) in the measuring device (10) by taking into account an average consumption.

17. A measuring system according to one of the claims 1 to 16, **characterized in that** a counter (11") is provided in the measuring device (10), in which measuring intervals for determining a total driving duration are added up.

18. A measuring system according to one of the claims 1 to 17, **characterized in that** an average speed can be determined in the measuring device (10) from a total driving distance covered and a total driving duration.

19. A measuring system according to one of the claims 2 to 18, **characterized in that** an intake temperature can be determined from the temperature value (61) in the measuring device (10).

20. A measuring system according to one of the claims 1 to 19, **characterized in that** an analog or digital display (12) for displaying a measurement result is provided on the measuring device (10).

21. A measuring system according to claim 20, **characterized in that** the display (12) can be switched to the display of different operating parameters.

22. A measuring system according to one of the claims 1 to 21, **characterized in that** the measuring device (10) is arranged as pure software.

23. A measuring method for determining operating parameters of a motor vehicle, comprising a measuring system according to claim 1, in which the operating parameters detected by sensors (20, 30, 40, 50, 60) are signaled to a vehicle data bus (70), are evaluated in a measuring device (10) connected thereto and are displayed.

## Revendications

1. Système de mesure pour des grandeurs caractéristiques de fonctionnement d'un véhicule à moteur avec un appareil de mesure (10) et des capteurs (20, 30, 40, 50, 60) reliés à celui-ci pour l'acquisition des grandeurs caractéristiques de fonctionnement, qui sont analysées sur l'appareil de mesure (10) et présentées dans un affichage, **caractérisé en ce que** les grandeurs caractéristiques de fonctionnement acquises sont transmises via un bus de données de véhicule (70) à l'appareil de mesure (10) comprenant un processeur du bus de données de véhicule (70) en vue du traitement des grandeurs caractéristiques de fonctionnement, une unité de commutation (13) étant prévue sur laquelle un intervalle de mesure pour l'acquisition des grandeurs caractéristiques de fonctionnement (21, 31, 41, 51, 61) peut être prédéfini.

2. Système de mesure selon la revendication 1, **caractérisé en ce que** les grandeurs caractéristiques de fonctionnement comprennent une valeur de consommation (21) de carburant, une valeur de distance parcourue (31), une valeur de vitesse (41), une valeur de remplissage du réservoir (51), une valeur de température (61), une valeur de régime moteur et/ou une valeur de couple.

3. Système de mesure selon la revendication 1 ou 2, **caractérisé en ce que** les grandeurs caractéristiques de fonctionnement sont associées à des groupes de signaux standardisés d'un protocole de bus de données CAN (71).

4. Système de mesure selon les revendications 2 et 3, **caractérisé en ce que** la valeur de consommation (21) est enregistrée dans le groupe de signaux ECM EngineGeneralStatus avec l'identification $300.

5. Système de mesure selon la revendication 4, **caractérisé en ce que** la valeur de consommation (21) est enregistrée dans le champ de signal FuelInj ectedRollingCount (72).

6. Système de mesure selon les revendications 2 et 3, **caractérisé en ce que** la valeur de distance parcourue (31) est enregistrée dans le groupe de signaux ECM VehicleSpeedandOdometer avec l'identification $410.

7. Système de mesure selon la revendication 6, **caractérisé en ce que** la valeur de distance parcourue (31) est enregistrée dans le champ de signal DistanceRollingCountLeftNonDrivenWheel (73).

8. Système de mesure selon la revendication 6 ou 7, **caractérisé en ce que** la valeur de distance parcourue (31) est enregistrée dans le champ de signal DistanceRollingCountRightNonDrivenWheel (74).

9. Système de mesure selon les revendications 2 et 3, **caractérisé en ce qu'**une valeur de vitesse (41) est enregistrée dans un champ de signal VehicleSpeed (75).

10. Système de mesure selon la revendication 1, **caractérisé en ce que** l'intervalle de mesure est compris entre 49 ms et 101 ms.

11. Système de mesure selon l'une des revendications 1 à 10, **caractérisé en ce qu'**une consommation actualisée peut être déterminée sur l'appareil de mesure (10) à partir des valeurs de consommation (21) acquises sur un intervalle de mesure.

12. Système de mesure selon l'une des revendications 1 à 11, **caractérisé en ce qu'**il est prévu sur l'appareil de mesure (10) au moins un compteur (11) sur lequel sont additionnées les valeurs de consommation (21) et de distance parcourue de plusieurs intervalles de mesure, à partir desquelles une consommation moyenne peut être déterminée.

13. Système de mesure selon la revendication 12, **caractérisé en ce que** le compteur (11) peut être remis à zéro.

14. Système de mesure selon la revendication 12, **caractérisé en ce qu'**une distance totale parcourue peut être déterminée à partir du calcul de la moyenne des valeurs de distance parcourue (31) additionnées dans les champs de signal DistanceRollingCountLeftNonDrivenWheel (73) et DistanceRollingCountRightNonDrivenWheel (74).

15. Système de mesure selon la revendication 14, **caractérisé en ce que** la valeur de vitesse du champ de signal VehicleSpeed (75) est intégrée dans le calcul de la moyenne des valeurs de distance parcourue (31).

16. Système de mesure selon l'une des revendications 2 à 15, **caractérisé en ce qu'**une autonomie restante peut être déterminée à partir de la valeur de remplissage du réservoir (51) sur l'appareil de mesure (10) compte tenu d'une consommation moyenne.

17. Système de mesure selon l'une des revendications 1 à 16, **caractérisé en ce qu'**il est prévu sur l'appareil de mesure (10) un compteur (11") sur lequel des intervalles de mesure sont additionnés pour déterminer une durée de circulation totale.

18. Système de mesure selon l'une des revendications 1 à 17, **caractérisé en ce qu'**une vitesse moyenne peut être déterminée sur l'appareil de mesure (10) à partir d'une distance totale parcourue et d'une durée de circulation totale.

19. Système de mesure selon l'une des revendications 2 à 18, **caractérisé en ce qu'**une température d'aspiration peut être déterminée à partir de la valeur de température (61) sur l'appareil de mesure (10).

20. Système de mesure selon l'une des revendications 1 à 19, **caractérisé en ce qu'**il est prévu sur l'appareil de mesure (10) un affichage (12) analogique ou numérique pour la présentation d'un résultat de mesure.

21. Système de mesure selon la revendication 20, **caractérisé en ce que** l'affichage (12) peut être commuté sur la présentation de différentes grandeurs caractéristiques de fonctionnement.

22. Système de mesure selon l'une des revendications 1 à 21, **caractérisé en ce que** l'appareil de mesure (10) est réalisé sous forme purement logicielle.

23. Procédé de mesure pour déterminer des grandeurs caractéristiques de fonctionnement d'un véhicule à moteur, avec un système de mesure selon la revendication 1, dans lequel les grandeurs caractéristiques de fonctionnement acquises par des capteurs (20, 30 40, 50, 60) sont transmises via un bus de données de véhicule (70), analysées sur un appareil de mesure (10) connecté à celui-ci et affichées.
